# EUROPÄISCHE PATENTSCHRIFT

(11) **EP 2 399 006 B1**
(45) Veröffentlichungstag und Bekanntmachung des Hinweises auf die Patenterteilung: **23.08.2017**
(21) Anmeldenummer: 10708092.1
(22) Anmeldetag: 30.01.2010
(51) Int. Cl.: F01D 5/30, F01D 5/06, B23K 15/00, B23K 35/30

(54) **VERFAHREN ZUM HERSTELLEN EINES INTEGRAL BESCHAUFELTEN ROTORS SOWIE ROTOR**
METHOD OF PRODUCING A ROTOR CONTAINING A PLURALITY OF BLADES AND ROTOR
PROCÉDÉ DE FABRICATION D'UN ROTEUR AYANT DES AUBES ET ROTEUR

(30) Priorität: 21.02.2009 DE 102009010025
(43) Veröffentlichungstag der Anmeldung: 28.12.2011
(73) Patentinhaber: MTU Aero Engines AG, 80995 München (DE)
(72) Erfinder: UIHLEIN, Thomas, 85221 Dachau (DE); STEINHARDT, Erich, 81377 München (DE)
(86) Internationale Anmeldenummer: PCT/DE2010/000100
(87) Internationale Veröffentlichungsnummer: WO 2010/094255

(56) Entgegenhaltungen:
- EP-A1- 2 047 938
- EP-A2- 2 000 631
- WO-A1-2005/075140
- DE-A1-102004 032 975
- DE-A1-102004 043 746
- JP-A- 62 107 866
- US-A- 4 096 615
- US-A- 5 038 014

## Beschreibung

Die Erfindung betrifft ein Verfahren zum Herstellen eines integral beschaufelten Rotors, insbesondere für eine Gasturbine, sowie den Rotor selbst.

Gasturbinenrotoren mit integraler Beschaufelung bezeichnet man abhängig davon, ob ein im Querschnitt scheibenförmiger oder ein im Querschnitt ringförmiger Rotor bzw. Rotorträger (im Folgenden Rotorgrundkörper genannt) vorhanden ist, als Blisk bzw. Bling. Blisk ist die Kurzform von Bladed Disk und Bling von Bladed Ring.

Aus dem Stand der Technik ist es bekannt, Gasturbinenrotoren mit integraler Beschaufelung durch Fräsen aus dem Vollen herzustellen, was natürlich sehr aufwendig und teuer ist, weshalb dieses Verfahren nur für relativ kleine Gasturbinenrotoren Verwendung gefunden hat.

Ein anderes, bei großen Rotoren Anwendung findendes Verfahren ist das Reibschweißen. Dabei werden Rotorgrundkörper und die Schaufeln separat hergestellt und anschließend miteinander reibverschweißt, insbesondere durch Linearreibschweißen. Ein Vorteil des Herstellens mittels Schweißen besteht darin, dass Rotorgrundkörper und Turbinenschaufeln aus unterschiedlichen Materialien gefertigt werden können, die den unterschiedlichen Anforderungen dieser Abschnitte des Rotors anpassbar sind. Schwierig ist die Ausrichtung der Schaufeln zum Rotorgrundkörper im gefügten Zustand, insbesondere beim Reibschweißen, bei dem eines der beiden Teile relativ zum anderen bewegt werden muss. Bei Reibschweißverfabren bildet sich im Allgemeinen ein Schweißwulst aus, der nach dem Schweißvorgang durch weitere Bearbeitung des Rotors, beispielsweise durch Fräsen, entfernt werden muss.

Die Schaufeln des Rotors bestehen beispielsweise aus einkristallinen oder anderen Materialien, die ein Schmelzschweißverfahren nicht ermöglichen. Aus dem Stand der Technik ist es bekannt, zuerst ein Adapterelement an den Schaufelfuß zu fügen, welches dann wiederum an den Rotorgrundkörper angeschweißt wird.

Weitere Beispiele für das Verbinden von Schaufeln mit Rotorscheiben bzw. allgemein das Verbinden von Bauteilen und insbesondere das Schweißen sind aus der DE 10 2004 032 975 A1, WO 2005/075140 A1, US 4,096,615 A, EP 2 000 631 A2 und der JP 62107866 A bekannt.

Aufgabe der Erfindung ist es, ein Verfahren zum Herstellen eines integral beschaufelten Rotors zu schaffen, bei dem negative Auswirkungen auf die Materialeigenschaften durch die Fügevorgänge vermieden werden können und der Rotor nach dem Fügevorgang keine aufwendige Nachbearbeitung benötigt. Ferner soll ein möglichst einfach herstellbarer Rotor angegeben werden.

Das erfindungsgemäße Verfahren sieht hierzu die folgenden Schritte vor. In einem ersten Schritt werden ein Rotorgrundkörper mit wenigstens einer ersten Schweißfläche und eine Schaufel mit einer zweiten Schweißfläche bereitgestellt. Im folgenden Schritt werden Rotorgrundkörper und Schaufel positioniert, sodass die Stirnseiten des Rotors die Schweißflächen begrenzen und zwischen erster und zweiter Schweißfläche eine Fügezone gebildet wird, die sich zwischen den Stirnseiten des Rotors erstreckt, wobei eine erste Stirnfläche des Rotors der in Strömungsrichtung vorderen Seite des Rotors entspricht und eine zweite Stirnfläche des Rotors der in Strömungsrichtung hinteren Seite des Rotors entspricht. In einem abschließenden Schritt erfolgt ein Auffüllen der Fügezone mit Metallpulver und Schweißen des Metallpulvers mittels Laser oder Elektronenstrahl. Dabei wird die Fügezone schichtweise mit Metallpulver aufgefüllt, wobei jede Schicht geschweißt wird. Dabei verlaufen die Schichten in einer Radialebene des Rotors.

Da bei diesem Verfahren die Schaufel und der Rotorgrundkörper nicht relativ zueinander bewegt werden müssen können die Schaufeln sehr genau relativ zum Rotorgrundkörper positioniert werden. Durch das Auffüllen der Fügezone unter Verwendung eines generativen Verfahrens, wie z. B. des Laserauftragschweißverfahrens, wird teures Material eingespart, das konventionell zerspanend abgearbeitet werden müsste, beispielsweise durch Abfräsen von Schweißwulsten. Auf diese Weise können auch tiefe Fügezonen aufgefüllt und geschweißt werden. Ferner wird eine einfache Geometrie der Fügezone und eine Ausnutzung der Rotationssymmetrie des Rotors ermöglicht.

Gemäß der bevorzugten Ausführungsform sind natürlich mehrere Schaufeln und mehrere zugeordnete zweite Schweißflächen vorgesehen.

Vorzugsweise läuft die Fügezone konisch zu. Dies ermöglicht eine einfache Geometrie der Schweißflächen und eine gute Zugänglichkeit für Metallpulver und Laser bzw. Elektronenstrahl.

Vorzugsweise ist der Energieeintrag beim Schweißen so gewählt, dass an der zweiten Schweißfläche der Schaufel keine mikroskopische Aufschmelzung stattfindet. Dies verhindert eine negative Beeinflussung des Fügevorgang auf die Materialeigenschaften der Schaufel.

Gemäß einer weiteren Variante des Verfahrens wird beim Auffüllen der Fügezone eine Entlastungsöffnung freigelassen. Auf diese Weise entsteht eine Entlastungsöffriung bereits beim Fügevorgang und muss nicht später durch Bohren oder Fräsen hergestellt werden, wodurch Material und Kosten eingespart werden.

Zur Ausbildung der Entlastungsöffnung kann ein Überlaufrohr in der Fügezone eingebettet werden. Dies ermöglicht einerseits eine genaue Positionierung der Entlastungsöffnung und begrenzt andererseits die Tiefe der Fügezone.

Vorzugsweise wird beim Auffüllen der Fügezone ein Abstreif-Rechen oder Bürsten oder Walzen (je nach Geometrie) verwendet. So kann das Metallpulver auf einfache Weise in Schichten gleicher Höhe verteilt werden.

Die Erfindung betrifft darüber hinaus einen integral beschaufelten Rotor mit einer Fügezone zwischen Rotorgrundkörper und Schaufeln, die sich zwischen den Stirnseiten des Rotors erstreckt, wobei eine erste Stirnfläche des Rotors der in Strömungsrichtung vorderen Seite des Rotors entspricht und eine zweite Stirnfläche des Rotors der in Strömungsrichtung hinteren Seite des Rotors entspricht, wobei die Fügezone mit geschweißtem Metallpulver aufgefüllt ist. Die Fügezone weist dabei Schichten auf, die in einer Radialebene des Rotors verlaufen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 einen Rotorgrundkörper und eine Schaufel eines Rotors gemäß einer ersten Ausführungsform der Erfindung vor dem Fügevorgang;
- Figur 2 den Rotorgrundkörper und die Schaufel gemäß Figur 1 während des Fügevorgang;
- Figur 3 eine perspektivische Ansicht eines Rotors gemäß einer zweiten Ausführungsform der Erfindung; und
- Figur 4 einen Schnitt durch den Rotor gemäß Figur 3.

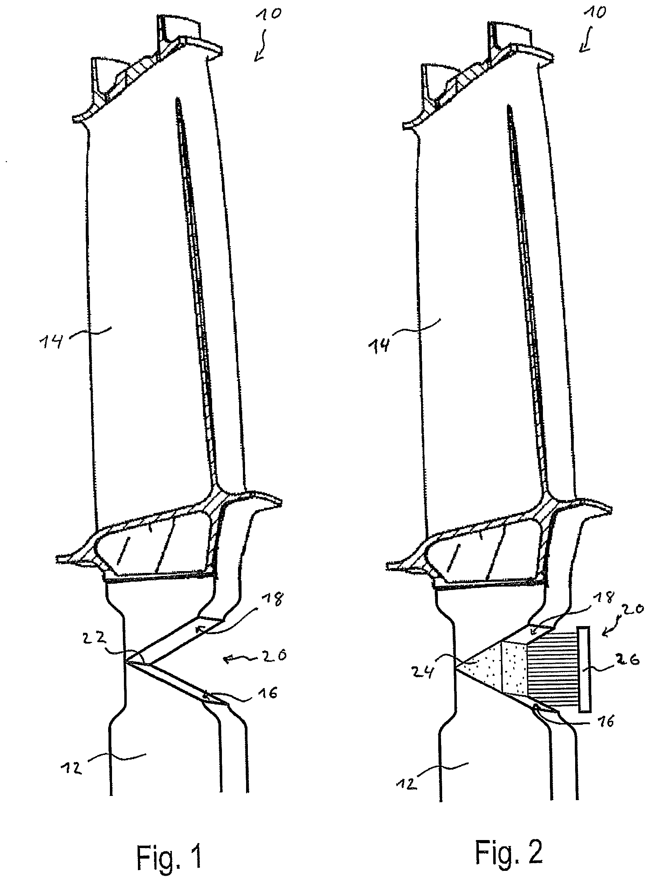

Figur 1 zeigt einen Schnitt durch eine erste Ausführungsform eines integral beschaufelten Rotors 10 mit einem Rotorgrundkörper 12 und einer Schaufel 14 der zahlreichen Schaufeln vor dem Fügevorgang, bei dem Rotorgrundkörper 12 und Schaufel 14 integral miteinander verbunden werden. Der Rotorgrundkörper 12 weist eine konisch zulaufende erste Schweißfläche 16 auf. Die Schaufel 14 weist eine konisch zulaufende zweite Schweißfläche 18 im Bereich des Schaufelfußes auf.

Rotorgrundkörper 12 und Schaufel 14 sind so zueinander positioniert, dass sich die erste Schweißfläche 16 und die zweite Schweißfläche 18 gegenüberliegen, wobei zwischen den Schweißfläche 16, 18 eine Fügezone 20 gebildet wird.

Rotorgrundkörper 12 und Schaufel 14 berühren sich entlang einer Linie 22 am linken Rand der Schweißflächen 16, 18. Die linke Stirnfläche des Rotors 10 weist somit einen direkten Übergang vom Rotorgrundkörper 12 zur Schaufel 14 auf, während auf der rechten Stirnfläche des Rotors 10 die Fügezone 20 zwischen Rotorgrundkörper 12 und Schaufel 14 liegt.

In der in Figur 1 gezeigten Ausführungsform bildet die linke Stirnfläche des Rotors 10 die in Strömungsrichtung vordere Seite des Rotors 10. Es ist natürlich auch möglich, dass die Linie 22, in der sich Rotorgrundkörper 12 und Schaufel 14 berühren, auf der rechten Seite der Schweißflächen 16, 18 liegt und die hintere Stirnfläche des Rotors 10 den direkten Übergang zwischen Rotorgrundkörper 12 und Schaufel 14 aufweist. Darüber hinaus ist auch möglich, dass die Linie 22 im Wesentlichen in der Mitte der Schweißflächen 16, 18 liegt und die Schweißflächen 16, 18 in beiden Richtungen konisch zulaufen, wobei eine linke und eine rechte Fügezone gebildet wird.

Figur 2 zeigt den Rotor 10 gemäß Figur 1, wobei die Fügezone 20 zur Hälfte mit Metallpulver 24 aufgefüllt ist. Ein schematisch gezeigter Abstreif-Rechen 26 wird für das gleichmäßige Auffüllen der Fügezone 20 verwendet. Der Abstreif-Rechen 26 kann entsprechend der Geometrie des Rotors 10 rotieren und kann somit über die gesamte rotationssymmetrische Fügezone 20 streichen.

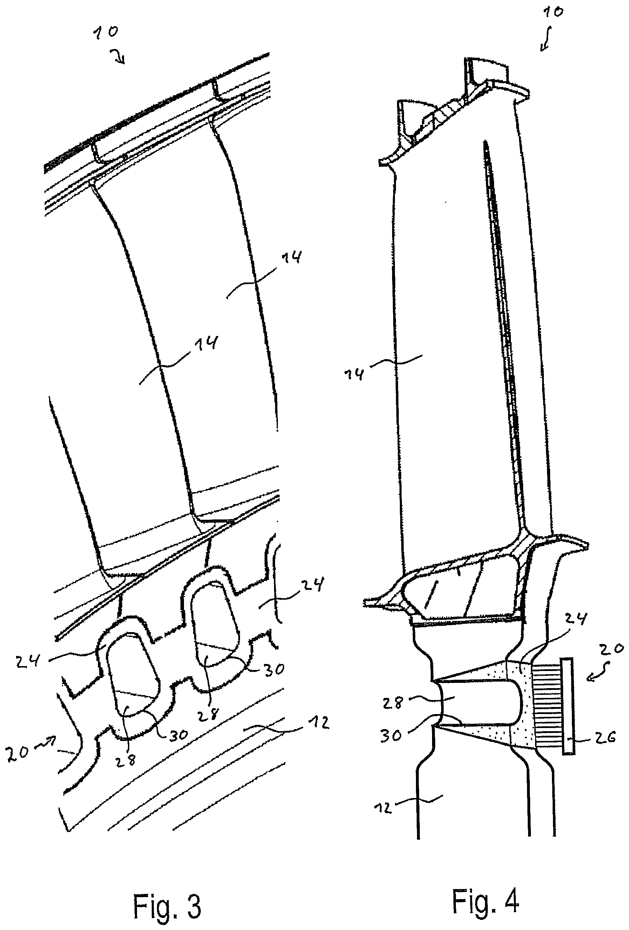

Figur 3 zeigt eine perspektivische Ansicht einer zweiten Ausführungsform des integral beschaufelten Rotors 10. Die Fügezone 20 weist im Bereich benachbarter Schaufeln 14 Verbreiterungen auf, in denen jeweils eine Entlastungsöffnung 28 vorgesehen ist. Die Entlastungsöffnungen 28 dienen einerseits zur Entlastung von thermischen und mechanischen Spannungen im Randbereich des Rotorgrundkörpers 12 und andererseits zur Gewichtsreduktion und Materialeinsparung. Zur Ausbildung der Entlastungsöffnungen 28 sind Überlaufrohre 30 in der Fügezone 20 im Metallpulver 24 eingebettet.

Figur 4 zeigt einen Schnitt durch den in Figur 3 gezeigten Rotor 10 auf Höhe einer Entlastungsöffnung 28. Die Fügezone 20 ist mit Ausnahme der Entlastungsöffnung 28 im Wesentlichen vollständig mit Metallpulver 24 aufgefüllt.

Der Rotorgrundkörper 12 ist vorzugsweise ein geschmiedeter Polykristall aus Nickel-Basis-Legierungen.

Die Schaufeln 14 können aus Nickel-Basis-Einkristallen, gerichtet erstarrten Materialien oder polykristallinen Materialien gefertigt sein, wobei die Materialien je nach Anwendungsbedürfnissen des Rotors gewählt werden.

Im Folgenden wird das Herstellungsverfahren des integral beschaufelten Rotors 10 beschrieben.

In einem ersten Verfahrensschritt werden der Rotorgrundkörper 12 mit einer ersten Schweißfläche 16 und wenigstens eine Schaufel 14 mit einer zweiten Schweißfläche 18 bereitgestellt. Die erste Schweißfläche 16, an der alle Schaufeln 14 angeschweißt werden, erstreckt sich insbesondere rotationssymmetrisch um den Rotorgrundkörper 12. Es ist auch möglich, dass mehrere getrennte erste Schweißflächen 16 vorgesehen sind, wobei beispielsweise die Anzahl der ersten Schweißflächen 16 am Rotorgrundkörper 12 der Anzahl der anzufügenden Schaufeln 14 entspricht.

Es können entweder eine einzige Schaufel 14 oder mehrere Schaufeln 14, insbesondere alle Schaufeln 14, gleichzeitig am Rotorgrundkörper 12 angeschweißt werden. Schaufel 14 und Rotorgrundkörper 12 werden so zueinander positioniert, dass sich zwischen erster und zweiter Schweißfläche 16, 18 eine Fügezone 20 bildet. In der in Figur 1 gezeigten ersten Ausführungsform erstreckt sich die Fügezone 20 rotationssymmetrisch um den gesamten Rotorgrundkörper 12.

Im nächsten Verfahrensschritt wird eine dünne Schicht Metallpulver 24 in die Fügezone 20 eingefüllt und mithilfe des Abstreif-Rechens 26 in homogener Dicke über die gesamte Fügezone 20 verteilt. Das Metallpulver 24 wird dann mittels Laser oder Elektronenstrahl geschweißt, wobei die erste Schweißfläche 16 und die zweite Schweißfläche 18 durch das geschweißte Metallpulver 24 verbunden werden.

Indem nur eine dünne Schicht Metallpulver 24 durch den Laser oder Elektronenstrahl geschweißt wird, kann der Energieeintrag beim Schweißen minimal gewählt werden, sodass an der zweiten Schweißfläche 18 der Schaufel 14 keine makroskopische Aufschmelzung stattfindet und die Materialeigenschaften der Schaufel 14 erhalten bleiben.

Nach dem ersten Schweißvorgang wird eine zweite Schicht Metallpulver 24 in die Fügezone 20 eingebracht und erneut angeschweißt. Dieser Vorgang wird so lange wiederholt, bis die gesamte Fügezone 20 mit Metallpulver 24 aufgefüllt ist.

Die erste und zweite Schweißfläche 16, 18 sind in der gezeigten Ausführungsform konisch zulaufende Flächen, wodurch eine gute Zugänglichkeit für das Metallpulver 24 und den Laser bzw. Elektronenstrahl erreicht wird. Die Schweißflächen 16, 18 können aber auch andere Geometrien aufweisen.

In Figur 2 ist der Rotor 10 während des Fügevorgangs gezeigt, wobei die Fügezone 20 ungefähr zur Hälfte mit Metallpulver 24 aufgefüllt ist. Wie man in dieser Darstellung gut erkennen kann, verlaufen die Metallpulverschichten im Wesentlichen in der Rotorebene (Radialebene).

In der in Figur 3 und Figur 4 gezeigten zweiten Ausführungsform des Rotors 10 verläuft das Herstellungsverfahren im Wesentlichen analog zur ersten Ausführungsform. Die Fügezone 20 ist hierbei nicht rotationssymmetrisch ausgebildet, sondern weist Verbreiterungen im Bereich von benachbarten Schaufeln 14 auf, in denen zu Beginn des Verfahrens bei der Positionierung von Rotorgrundkörper 12 und Schaufeln 14 Überlaufrohre 30 zur Bildung von Entlastungsöffnungen 28 angeordnet werden. Im Inneren der Überlaufrohre 30 wird kein Metallpulver 24 geschweißt, wodurch beim Auffüllen der Fügezone 20 die Entlastungsöffnung 28 freigelassen wird.

Die Überlaufrohre 30 bilden einen Überlauf für überschüssiges Metallpulver 24. Ist die Fügezone 20, wie in Figur 4 gezeigt, annähernd aufgefüllt, so ist es möglich, dass überschüssiges Metallpulver 24 in die Fügezone 20 gefüllt wird. Durch den Abstreif-Rechen 26 wird dieses überschüssige Metallpulver 24 in die durch das Überlaufrohr 30 gebildete Entlastungsöffnung 28 geschoben, fällt durch die Entlastungsöffnung 28 und kann auf der anderen Seite gesammelt und wieder verwendet werden.

Das Schweißverfahren wird folglich im liegenden Zustand des Rotors ausgerührt.

Durch einen solchen generativen Fügevorgang entspricht der Rotor 10 nach dem Fügevorgang im Wesentlichen seiner gewünschten Endkontur, wodurch nachträgliche Bearbeitungsschritte eingespart werden können.

## Patentansprüche

1. Verfahren zur Herstellung eines integral be schaufelten Rotors (10) mit einem Rotorgrundkörper und einer Vielzahl an Schaufeln, insbesondere für eine Gasturbine, mit den Verfahrensschritten:
- Bereitstellen eines Rotorgrundkörpers (12) mit wenigstens einer ersten Schweißfläche (16) und einer Schaufel (14) mit einer zweiten Schweißfläche (18);
- Positionierung von Rotorgrundkörper (12) und Schaufel (14), sodass die Stirnseiten des Rotors die Schweißflächen (16,18) begrenzen und zwischen erster und zweiter Schweißfläche (16,18) eine Fügezone (20) gebildet wird, die sich zwischen den Stirnseiten des Rotors erstreckt, wobei eine erste Stirnfläche des Rotors (10) der in Strömungsrichtung vorderen Seite des Rotors (10) entspricht und eine zweite Stirnfläche des Rotors (10) der in Strömungsrichtung hinteren Seite des Rotors (10) entspricht;
- Auffüllen der Fügezone (20) mit Metallpulver (24) und Schweißen des Metallpulvers (24) mittels Laser oder Elektronenstrahl, wobei die Fügezone (20) schichtweise mit Metallpulver (24) aufgefüllt wird, wobei jede Schicht geschweißt wird und wobei die Schichten in einer Radialebene des Rotors verlaufen.

2. Verfahren nach Anspruch 1, **dadurch gekennzeichnet, dass** die Fügezone (20) konisch zuläuft.

3. Verfahren nach einem der vorhergehenden Ansprüche, **dadurch gekennzeichnet, dass** der Energieeintrag beim Schweißen so gewählt ist, dass an der zweiten Schweißfläche (18) der Schaufel (14) keine makroskopische Aufschmelzung stattfindet.

4. Verfahren nach einem der vorhergehenden Ansprüche, **dadurch gekennzeichnet, dass** beim Auffüllen der Fügezone (20) eine Entlastungsöffnung (28) freigelassen wird.

5. Verfahren nach Anspruch 6, **dadurch gekennzeichnet, dass** zur Ausbildung der Entlastungsöffnung (28) ein Überlaufrohr (30) in der Fügezone (20) eingebettet wird.

6. Verfahren nach einem der vorhergehenden Ansprüche, **dadurch gekennzeichnet, dass** beim Auffüllen der Fügezone (20) ein Abstreif-Rechen (26), eine Abstreifbürste oder eine Walze verwendet wird.

7. Integral beschaufelter Rotor (10), insbesondere für eine Gasturbine, mit einer Fügezone (20) zwischen Rotorgrundkörper (12) und Schaufeln (14), die sich zwischen den Stirnseiten des Rotors erstreckt, wobei eine erste Stirnfläche des Rotors (10) der in Strömungsrichtung vorderen Seite des Rotors (10) entspricht und eine zweite Stirnfläche des Rotors (10) der in Strömungsrichtung hinteren Seite des Rotors (10) entspricht, wobei die Fügezone (20) mit geschweißtem Metallpulver (24) aufgefüllt ist, und die Fügezone (20) Schichten aufweist, die in einer Radialebene des Rotors verlaufen.

## Claims

1. A method for producing an integrally bladed rotor (10) having a main rotor body and a plurality of blades, in particular, for a gas turbine, with the method steps of:
• providing a main rotor body (12) with at least one first welding surface (16) and a blade (14) having a second welding surface (18);
• positioning the main rotor body (12) and blade (14) so that the end faces of the rotor delimit the welding surfaces (16,18) and a joining zone (20) extending between the end faces of the rotor is formed between the first and second welding surface (16, 18), wherein a first end surface of the rotor (10) corresponds to the side of the rotor (10) that is front in the direction of flow, and a second end surface of the rotor (10) corresponds to the side of the rotor (10) that is rear in the direction of flow; and
• filling the joining zone (20) with metal powder (24) and welding the metal powder (24) by means of a laser or electron beam, wherein the joining zone (20) is filled in layers with the metal powder (24), wherein each layer is welded, and wherein the layers lie in a radial plane of the rotor.

2. The method according to claim 1, **characterized in that** the joining zone (20) tapers conically.

3. The method according to any of the preceding claims, **characterized in that** the energy input during welding is selected so that no macroscopic fusion takes place at the second welding surface (18) of the blade (14).

4. The method according to any of the preceding claims, **characterized in that** a relief opening (28) is released when the joining zone (20) is being filled.

5. The method according to claim 6, **characterized in that** an overflow pipe (30) is embedded in the joining zone (20) in order to form the relief opening (28).

6. The method according to any of the preceding claims, **characterized in that** a scraper rake (26), a scraper brush, or a roller is used when the joining zone (20) is being filled,

7. An integrally bladed rotor (10), in particular, for a gas turbine, having a joining zone (20) between a main rotor body (12) and blades (14) that extends between the end faces of the rotor, wherein a first end surface of the rotor (10) corresponds to the side of the rotor (10) that is front in the direction of flow, and a second end surface of the rotor (10) corresponds to the side of the rotor (10) that is rear in the direction of flow, and wherein the joining zone (20) is filled with welded metal powder (24), and the joining zone (20) has layers that lie in a radial plane of the rotor.

## Revendications

1. Procédé de fabrication d'un rotor à aubage d'un seul tenant (10) comprenant un corps de base de rotor et une pluralité de pales, en particulier pour une turbine à gaz, comprenant les étapes de procédé consistant à :
- fournir un corps de base de rotor (12) avec au moins une première surface de soudure (16) et une pale (14) avec une seconde surface de soudure (18) ;
- positionner le corps de base de rotor (12) et la pale (14) de sorte que les faces avant du rotor délimitent les surfaces de soudure (16, 18) et que soit formée entre la première et la seconde surface de soudure (16,18) une zone de jonction (20) qui s'étend entre les faces avant du rotor, dans lequel une première face avant du rotor (10) correspond à la face avant du rotor (10) dans le sens de l'écoulement et une seconde face avant du rotor (10) correspond à la face arrière du rotor (10) dans le sens de l'écoulement ;
- remplir la zone de jonction (20) par une poudre métallique (24) et souder la poudre métallique (24) au moyen d'un laser ou d'un rayon électronique, dans lequel la zone de jonction (20) est remplie de poudre métallique (24) par couches, dans lequel chaque couche est soudée et dans lequel les couches s'étendent dans un plan radial du rotor.

2. Procédé selon la revendications 1, **caractérisé en ce que** la zone de jonction (20) se termine en cône.

3. Procédé selon l'une quelconque des revendications précédentes, **caractérisé en ce que** l'apport d'énergie lors du soudage est sélectionné de sorte qu'aucune fusion macroscopique ne se produise sur la seconde surface de soudure (18) de la pale (14).

4. Procédé selon l'une quelconque des revendications précédentes, **caractérisé en ce qu'**une ouverture de décharge (28) est libérée lors du remplissage de la zone de jonction (20).

5. Procédé selon la revendication 6, **caractérisé en ce que,** pour former l'ouverture de décharge (28), un tuyau de trop-plein (30) est noyé dans la zone de jonction (20).

6. Procédé selon l'une quelconque des revendications précédentes, **caractérisé en ce que,** lors du remplissage de la zone de jonction (20), on utilise une grille de séparation (26), une brosse d'enlèvement ou un rouleau.

7. Rotor à aubage d'un seul tenant (10), en particulier pour une turbine à gaz, comprenant une zone de jonction (20) entre le corps de base de rotor (12) et les pales (14), qui s'étend entre les faces avant du rotor, dans lequel une première face avant du rotor (10) correspond à la première face avant dans le sens de l'écoulement du rotor (10) et une seconde face avant du rotor (10) correspond à la face arrière dans le sens de l'écoulement du rotor (10), dans lequel la zone de jonction (20) est remplie d'une poudre métallique soudée (24) et la zone de jonction (20) présente des couches qui s'étendent dans un plan radial du rotor.
